# EUROPÄISCHE PATENTSCHRIFT

(11) **EP 1 926 660 B1**
(45) Veröffentlichungstag und Bekanntmachung des Hinweises auf die Patenterteilung: **30.12.2009**
(21) Anmeldenummer: 06805758.7
(22) Anmeldetag: 18.09.2006
(51) Int. Cl.: B64C 9/14, B64C 9/18, B64C 21/02

(54) **FORTSCHRITTLICHE FLÜGELHINTERKANTE AM FLÜGEL EINES FLUGZEUGS**
ADVANCED TRAILING EDGE CONTROL SURFACE ON THE WING OF AN AIRCRAFT
BORD DE FUITE PROGRESSISTE D'AILE D'AVION

(30) Priorität: 23.09.2005 DE 102005045759
(43) Veröffentlichungstag der Anmeldung: 04.06.2008
(73) Patentinhaber: Airbus Operations GmbH, 21129 Hamburg (DE)
(72) Erfinder: RECKZEH, Daniel, 28816 Stuhr (DE); SCHLIPF, Bernhard, Rainer, 28201 Bremen (DE); ANDREANI, Luc, 28325 Bremen (DE); SUTCLIFFE, Mark, 28211 Bremen (DE)
(74) Vertreter: Kopf, Korbinian Paul
(86) Internationale Anmeldenummer: PCT/EP2006/009067
(87) Internationale Veröffentlichungsnummer: WO 2007/054150

(56) Entgegenhaltungen:
- DE-A1- 1 506 615
- GB-A- 176 909
- GB-A- 1 602 905
- US-A- 2 261 363
- US-A- 2 635 837
- US-A- 3 921 942

## Beschreibung

Die vorliegende Erfindung betrifft eine fortschrittliche Flügelhinterkante am Tragflügel eines Flugzeugs.

Die beschriebene Einrichtung wird am sinnvollsten als fortschrittliche Flügelhinterkante (ATECS - Advanced Trailing Edge Control Surfaces) bezeichnet, weil sie durch die vorgesehene Kinematik und neue multifunktionale Steuerflächen ein erheblich erweitertes Einsatzspektrum gegenüber dem mechanischen Grundprinzip einer einfachen Spaltklappe aufweist.

Im Stand der Technik sind eine große Anzahl von Flügelhinterklappensystemen bekannt, von denen zunächst ein Auszug der für die vorliegende Erfindung bedeutendsten Vertreter erläutert werden sollen. Die primär relevanten Vertreter dieser sind in erster Linie Einfachspaltklappensysteme. Diese Klappensysteme werden sowohl als primäre als auch sekundäre Flugsteuerung bzw. auch als kombinierte Steuerflächen genutzt. Weiterhin lassen sich diese Vertreter als Rollsteuerung, Nicksteuerung und zur Auftriebserhöhung nutzen. Die letzten beiden genannten Patentschriften zeigen exemplarisch Möglichkeiten auf, um einen adaptiven Flügel zu generieren, der nicht nur für einen "optimalen" Arbeitspunkt ausgelegt ist.

Im Grunde genommen handelt es sich bei der einfachen Spaltklappe in der Regel um eine einfache Scharnierlagerung, die durch eine Drehachse im Raum definiert ist. Ist die Drehachse weit unter dem Flügelprofil, lassen sich damit vorteilhafte technische Wirkungen erzielen (US4120470):
- Die Flügelfläche und die Flügelwölbung werden beim Ausfahren der Klappe (positive Klappenausschläge) vergrößert, wodurch der Auftrieb stark zunimmt.
- Die Klappe bzw. die Steuerfläche wird in die energiereiche Luftströmung gefahren, wodurch ebenfalls der Auftrieb zusätzlich gesteigert wird.

Es entstehen jedoch einige nachteilige technische Wirkungen:
- Negative Klappenausschläge sind in der Regel nicht möglich, weil die Nasenkante der Klappe die Hüllgeometrie des Flügels auf der Profilunterseite verlässt bzw. es kommt zu erheblichen Bauraumkonflikten im Hinterholmbereich des Flügels (abhängig von der Lage des Drehpunktes).
- Es entstehen häufig konvergent/divergente Luftströmungen in der Spaltluftströmung mit dem entsprechenden Auftriebsverlust und einer starken Widerstandserhöhung.
- Es wird eine in der Luftströmung liegende aerodynamische Verkleidung des mechanischen Klappensystems notwendig, dabei entsteht wieder zusätzlicher Luftwiderstand.

Ist die Drehachse nahe an der Nasenkante der Klappe (US2117607, US2169416; US2276522, US2836380, US2920844; US4015787, US4395008; US4471927, US4962902; DE1943680, DE19803421A1, FR846337; US6601801), lassen sich folgende vorteilhaften technischen Wirkungen erzielen:
- Positive und negative Klappenausschläge lassen sich durch einfachere Konstruktionen umsetzten.
- Dies ist für primäre Steuerflächen entscheidend, weil diese in der Regel in beide Richtungen ausschlagen müssen (Höhen-/Quer-/Seitenruder). Sekundäre Steuerflächen operieren primär als Hochauftriebskomponenten am Flugzeug, diese haben in der Regel nur eine bevorzugte Wirkrichtung.
- Es entsteht jedoch ein entscheidender Nachteil durch diese Lage des Drehpunktes: die energiereiche Luftströmung kann die Klappe nicht mehr umströmen. Die Umströmung der energiereichen Luftströmung auf der Flügelunterseite hat die vorteilhafte technische Wirkung, dass das Ablöseverhalten des gesamten Flügels entscheidend verbessert wird. Dieses Problem wird durch eine unter dem Flügel liegende Belüftungsklappe beseitigt (US2117607). Durch die untere Belüftungsklappe kann auch die Klappe mit einen Drehpunkt nahe an der Flügelvorderkante mit der energiereiche Luftströmung umströmt werden. Im Reiseflug ist die untere Belüftungsklappe geschlossen, damit das gesamte Flügelprofil den minimalen Luftwiderstand gewährleistet.

Die untere Belüftungsklappe der hier genannten Patentschriften ist in der Regel nur für positive Klappenausschläge konzipiert (US2117607, US2169416). Die mechanische Anbindung zwischen unterer Belüftungsklappe und Klappe wird entweder durch eine mechanische Zwangskopplung bzw. über einen weiteren Antrieb realisiert.

Es gibt auch bekannte Klappensysteme (US6601801), die über eine untere Belüftungsklappe verfügen, die auch mit negativen Klappenausschlägen umgehen können. Das verwendete mechanisch Systeme ist jedoch relativ komplex und verfügt über eine hohe Anzahl an Teilen.

Ein weiteres bekanntes Klappensystem (DE1943680) verfügt sowohl über eine untere und obere Belüftungsklappe, die mit positiven und negativen Klappenausschlägen umgehen kann. Ein entscheidender Nachteil dieses Konzeptes ist, dass die Belüftungsklappen die äußere Flügelprofilkontur verlassen (Widerstand, Lärm). Es handelt sich hierbei um eine symmetrische und klemmanfällige Konstruktion, die in beiden Richtungen die vorteilhafte technische Wirkung des Spaltes ausnutzt.

Viele der bekannten Klappensysteme verfügen über relativ komplexe kinematische Systeme, die aus einer hohen Anzahl an Teilen bestehen (US2276522, US2836380, US2920844), weiterhin werden klemmanfällige Kurvengetriebe verwendet (US2836380, DE1943680, DE19803421A1). Des weiteren kommen Federelemente (Energiespeicher) zur Anwendung, die wiederum erhöhte Antriebslasten erzeugen (US2169416, US6601801). Flexible Strukturen für größere Abdeckflächen, welche die engen aerodynamischen Toleranzen nur bedingt erfüllen können (US4395008, US4471927).

Normale Hochauftriebssysteme sind nur für positive Klappenausschläge ausgelegt, auf ihrer oberen Seite sind die meisten Systeme mit Bremsklappen ausgerüstet. Die Bremsklappen werden meistens über einen eigenen Antrieb angesteuert (US4120470). Die meisten Konzepte, welche auch mit negativen Klappenausschlägen umgehen können, brauchen meistens auf ihrer oberen Seite eine weitere obere Abdichtklappe (flexibel: US4395008, US4471927) bzw. eine obere Belüftungsklappe (starr: DE1943680) oder Federdichtung (US6601801), um eine geometrische Kollision mit der oberen Flügelkontur zu vermeiden. Es gibt bislang noch keine Systeme, welche die obere Abdichtklappe gleichzeitig als Bremsklappe verwenden, wodurch die Anzahl an Steuerflächen deutlich reduziert würde.

Ein adaptiver Flügel erfordert in der Regel weitere komplexe Systeme, die häufig mit den bestehenden primären und sekundären Steuerflächen kollidieren. Es werden weitere Antriebe, eine hohe Anzahl an Teilen, flexible Strukturen und weitere Regelkreise mit den entsprechen Sensoren notwendig. Exemplarisch seien zwei benannte Systeme zum Verstellen des gesamten Flügelprofils bzw. Profildruckverlaufes genannt (DE 19732953C1, DE60002851T2).

Ferner beschreibt DE 1 506 615, welches den nächstliegenden Stand der Technik darstellt und den Oberbegriff des Anspruchs 1 offenbart, eine Flügelklappenanordnung, bei der in der Verlängerung eines Profils (Tragflügel oder Leitwerk) eine Steuerklappe mittels eines Antriebes um eine Achse schwenkbar angeordnet ist. Die in Spannweitenrichtung verlaufende Achse kann grundsätzlich in Richtung auf das Profil zu oder von diesem weg durch einen weiteren Antrieb verschoben werden. Zur Abdeckung des Spaltes zwischen dem Profil und der Steuerklappe dienen zwei Abdeckklappen. Diese sind mittels je eines angeformten Schwenkarmes um profilfeste Achsen schwenkbar, wobei ihre Betätigung direkt von der Steuerklappe über zwei Koppeln abgeleitet wird.

Die Aufgabe der vorliegenden Erfindung ist es, eine Flügelhinterkante zu schaffen, bei der sowohl primäre und sekundäre Steuerflächen am Flügel mit weniger mechanischem Aufwand und weniger Gewicht verwirklicht sind.

Diese Aufgabe wird durch eine fortschrittliche Flügelhinterkante mit den Merkmalen des Anspruchs 1 gelöst. Vorteilhafte Ausführungen und Weiterbildungen der erfindungsgemäßen Flügelhinterkante sind in den Unteransprüchen angegeben.

Durch die Erfindung wird eine fortschrittliche Flügelhinterkante am Flügel eines Flugzeugs, mit einem Flügel, einer an der Hinterkante des Flügels angeordneten, in Spannweitenrichtung verlaufenden, auf unterschiedliche Ausschläge einstellbaren Klappe, einer an der Oberseite zwischen dem Flügel und der Klappe angeordneten schwenkbar beweglichen Abdichtklappe und einer an der Unterseite zwischen dem Flügel und der Klappe angeordneten schwenkbar beweglichen Belüftungsklappe geschaffen. Erfindungsgemäß ist es vorgesehen, dass die Klappe sowohl über positive Klappenausschläge nach unten und negative Klappenausschläge nach oben einstellbar ist, wobei für eine Nutzung der Klappe als Steuerklappe mit Einstellungen der Klappe zwischen negativen und kleinen positiven Klappenausschlägen das Flügelprofil an der Oberseite durch die Abdichtklappe und an der Unterseite durch die Belüftungsklappe geschlossen ist und für eine Nutzung der Klappe als auftriebserhöhende Klappe mit Einstellungen der Klappe zwischen kleinen positiven und großen positiven Klappenausschlägen die Belüftungsklappe eine Strömung von der Unterseite des Flügels zur Oberseite der Klappe freigibt und die Abdichtklappe zur Freigabe eines Abstroms von der Oberseite der Klappe um einen vorgegebenen Spalt entfernt wird.

Gemäß einer bevorzugten Ausführungsform der erfindungsgemäßen fortschrittlichen Flügelhinterkante ist es vorgesehen, dass die Abdichtklappe zur Nutzung als Bremsklappe mit ihrem hinteren Ende nach oben schwenkbar ist.

Gemäß einer anderen bevorzugten Ausführungsförm der erfindungsgemäßen fortschrittlichen Flügelhinterkante ist es vorgesehen, dass die Abdichtklappe mit der Klappe zwangsgeführt ist.

Gemäß einer bevorzugten Ausführungsform der Erfindung ist ein Klappenführungsmechanismus vorgesehen, der durch ein zwischen dem Flügel und der Klappe angeordnetes Drehgelenk enthält.

Vorzugsweise ist der Drehpunkt des Drehgelenks so positioniert, dass für negative Klappenausschläge der Klappe die Flügelprofilkontur nicht verlassen wird und für positive Klappenausschläge der Klappe eine wesentliche Flächen- und Wölbungsvergrößerung erzielt wird.

Gemäß einer bevorzugten Ausführungsform der Erfindung ist es vorgesehen, dass der Antrieb für den Klappenführungsmechanismus durch ein lineares Schubelement gebildet ist, das mit dem Flügel und der Klappe gekoppelt ist.

Vorzugsweise enthält das Schubelement einen Aktuator.

Der Aktuator kann hydraulisch (Hydraulikaktuator) oder mechanisch (Spindelantrieb) betrieben sein.

Gemäß einer bevorzugten Ausführungsform der Erfindung ist es vorgesehen, dass die Klappe ist mit der Belüftungsklappe mechanisch zwangsgeführt bzw. zwangsgekoppelt ist.

Gemäß einer bevorzugten Ausführungsform der Erfindung ist ein Belüftungsklappenmechanismus vorgesehen, bei dem die Belüftungsklappe über ein an ortsfesten Lagern und gelagertes, zwei Hebel enthaltendes Hebelwerk an den Flügel angebunden ist.

Gemäß einer bevorzugten Ausführungsform der Erfindung ist ein Abdichtklappenmechanismus vorgesehen, bei dem die Abdichtklappe mit der Klappe zwangsgeführt ist.

Vorzugsweise ist bei dem Abdichtklappenmechanismus die Abdichtklappe durch ein über ein nahe dem ortsfesten Lager an einem zweiten Lager mit der Klappe und nahe einem vierten Lager über ein drittes Lager mit der Abdichtklappe gekoppeltes Hebelwerk durch die Klappe zwangsgeführt.

Vorzugsweise bildet das den Kopplungsstab enthaltende, die Abdichtklappe mit der Klappe verbindende Hebelwerk ein Gelenkviereck.

Gemäß einer bevorzugten Ausführungsform der Erfindung ist es vorgesehen, dass, dass das vierte Lager bei Bewegung der Abdichtklappe im Sinne einer Bremsklappenfunktion mitgenommen wird.

Gemäß noch einer bevorzugten Ausführungsform der Erfindung ist ein weiteres Lager an der oberen Abdichtungsklappe vorgesehen, mit welchem ein Aktuator zur Betätigung der Abdichtklappe im Sinne einer Bremsklappenfunktion gekoppelt ist.

Vorzugsweise ist das weitere Lager auf einer gemeinsamen Drehachse mit dem vierten Lager angeordnet.

Insbesondere ist der Abdichtklappenmechanismus so ausgebildet, dass für kleine positive Klappenwinkel bis hin zu allen negativen Klappenwinkeln der Klappe eine Kollision zwischen der Klappe und der Abdichtklappe vermieden und die Abdichtklappe im gesamten gerade erwähnten Bereich gegen die Klappe abgedichtet ist.

Gemäß einer bevorzugten Ausführungsform der Erfindung ist es vorgesehen, dass für größere positive Klappenausschläge der Klappe, wo die Klappe als auftriebserhöhende Komponente wirksam ist, die obere Abdichtklappe im Sinne einer Erzeugung eines konvergenten aerodynamischen Spalts durch Drehung um das vierte Lager nach unten abgesenkt wird.

Vorzugsweise wird eine funktionale Abhängigkeit zwischen dem absoluten Bremsklappenausschlag der oberen Abdichtklappe (bezogen auf den ortsfesten Flügel 1) und dem Klappenausschlagwinkel der Klappe durch eine entsprechende Regelung im Flugsteuerungscomputer vorgenommen.

Gemäß einer bevorzugten Ausführungsform der Erfindung ist es vorgesehen, dass die für die Bremsklappenfunktion vorgesehene Aktuatoreinrichtung das Element über das weitere Lager um ein Lager auf einer Kreisbahn bewegt, wodurch das durch das vierte Gelenk und das weitere Gelenk gebildete Doppelgelenk ebenfalls sich auf dieser Kreisbahn bewegt.

Vorzugsweise ist der Bremsklappenmechanismus weitgehend vom oberen Abdichtungsmechanismus entkoppelt.

Der Bremsklappenmechanismus kann auch nicht in das kinematische System integriert sondern separat vorgesehen sein.

Gemäß einer bevorzugten Ausführungsform der Erfindung ist es vorgesehen, dass alle Lager einfache Drehgelenke sind.

Gemäß einer anderen bevorzugten Ausführungsform der Erfindung ist es vorgesehen, dass die Konstruktion im wesentlichen nur aus Stäben und Fachwerken besteht.

Gemäß einer bevorzugten Ausführungsform der Erfindung ist Kinematik in einer dreidimensionalen Ausführung für eine zylindrische Bewegung der Klappe vorgesehen.

Gemäß einer anderen bevorzugten Ausführungsform der Erfindung ist die Kinematik in einer dreidimensionalen Ausführung für eine konische Bewegung der Klappe vorgesehen.

Die fortschrittliche Flügelhinterkante kann als primäre Steuerfläche dienen.

Die fortschrittliche Flügelhinterkante kann als sekundäre Steuerfläche dienen.

Die fortschrittliche Flügelhinterkante kann als adaptive Flügelkomponente dienen.

Die erfindungsgemäße fortschrittliche Flügelhinterkante ist in mit Vorteil für eine Verwendung an der Flügelhinterkante in modernen Verkehrsflugzeugen und Transportflugzeugen mit einem hohem Abfluggewicht vorgesehen.

Die erfindungsgemäße fortschrittliche Flügelhinterkante zeichnet sich vorteilhafterweise durch ein geringes Gewicht, durch eine hohe Zuverlässigkeit, durch eine geringe Anzahl an Teilen und durch eine strukturell einfache Konstruktion aus. Die komplexen Forderungen an ein fortschrittliches Flügelhinterkantenkonzept wurden bestmöglich verwirklicht. Des Weiteren entfallen die ganzen Tragstrukturen und das kinematischen System eines konventionellen Hochauftriebssystems. Die aerodynamische Verkleidung ist bei der fortschrittlichen Flügelhinterkante erheblich kleiner, wodurch sich für den gesamten Reiseflug ein wirtschaftlicher Vorteil einstellen wird (geringer Widerstand, geringe Treibstoffkosten).

Im Folgenden soll ein Ausführungsbeispiel der erfindungsgemäßen fortschrittlichen Flügelhinterkante unter Bezugnahme auf die Zeichnung im Einzelnen beschrieben werden.

### Es zeigt:

- Figur 1: eine schematisierte Gesamtdarstellung einer fortschrittlichen Flügelhinterkante gemäß einem Ausführungsbeispiel der Erfindung in einer seitlichen Schnittansicht;
- Figur 2: eine schematisierte Darstellung eines in der fortschrittlichen Flügelhinterkante enthaltenen Klappenführungsmechanismus gemäß dem Ausführungsbeispiel der Erfindung in einer seitlichen Schnittansicht;
- Figur 3: eine schematisierte Darstellung eines in der fortschrittlichen Flügelhinterkante enthaltenen unteren Belüftungsklappenmechanismus gemäß dem Ausführungsbeispiel der Erfindung in einer seitlichen Schnittansicht;
- Figur 4: eine schematisierte Darstellung eines in der fortschrittlichen Flügelhinterkante enthaltenen oberen Abdichtklappenmechanismus gemäß dem Ausführungsbeispiel der Erfindung in einer seitlichen Schnittansicht;
- Figur 5: eine schematisierte Darstellung eines in der fortschrittlichen Flügelhinterkante enthaltenen Bremsklappenmechanismus gemäß dem Ausführungsbeispiel der Erfindung in einer seitlichen Schnittansicht;
- Figuren 6a) bis e): jeweilige schematisierte Darstellungen der erfindungsgemäßen Flügelhinterkante mit unterschiedlichen Einstellungen der Klappe; und
- Figur 7a) bis c): jeweilige schematisierte Darstellungen der erfindungsgemäßen Flügelhinterkante mit unterschiedlichen Einstellungen der oberen Abdichtklappe in ihrer Funktion als Bremsklappe.

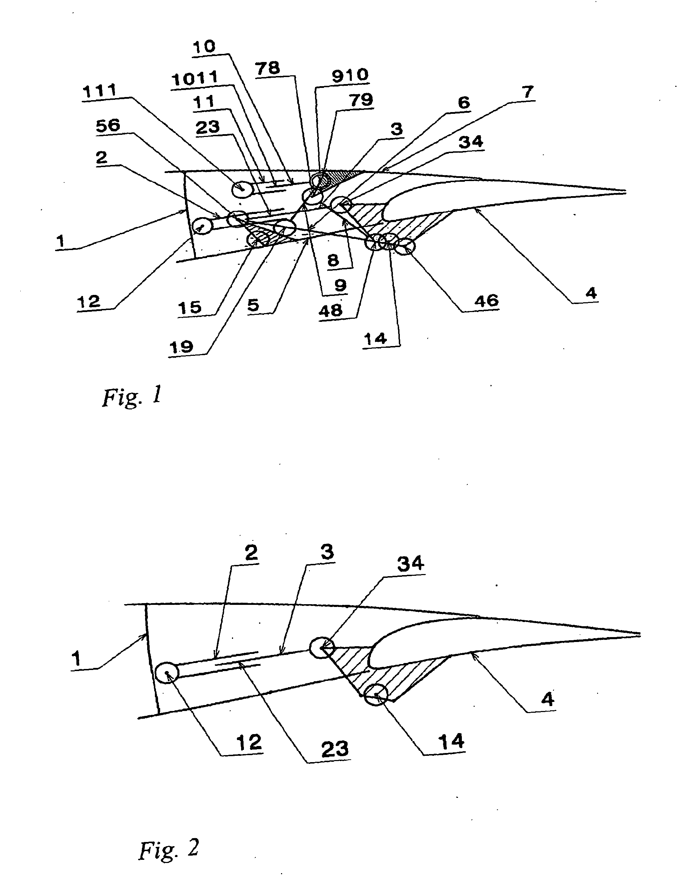

Die fortschrittliche Flügelhinterkante am Flügel eines Flugzeugs ist in ihrer Gesamtheit in Figur 1 schematisch dargestellt. Die folgende Nomenklatur wird verwendet, um die kinematische Skizze zu verstehen. Einzelne kinematische Elemente werden durchgängig nummeriert und die Verbindungsgelenke zwischen zwei Teilen werden jeweils durch die zwei Nummern der jeweiligen Elemente gekennzeichnet (z.B.: Element 1 und Element 5 sind durch ein Drehgelenk 15 verbunden, sinngemäß ergeben sich die anderen Verbindungselemente). Die fortschrittliche Flügelhinterkante umfasst einem Flügel 1, eine an der Hinterkante des Flügels 1 angeordnete, in Spannweitenrichtung verlaufende, auf unterschiedliche Ausschläge einstellbaren Klappe 4, die sowohl als Steuerklappe als auch als auftriebserhöhende Klappe wirksam sein kann. Diese wird im folgenden stets nur kurz als "Klappe" bezeichnet. Dabei ist jedoch eine strikte Trennung zwischen Steuerfläche (primäre Steuerfläche) und Hochauftriebskomponente (sekundäre Steuerfläche) im herkömmlichen Sinne nicht mehr angebracht, vielmehr können beide Funktionen mehr oder weniger nahtlos ineinander übergehen. An der Oberseite zwischen dem Flügel 1 und der Klappe 4 ist eine Abdichtklappe 5 schwenkbar beweglich angeordnet und an der Unterseite zwischen dem Flügel 1 und der Klappe 4 ist eine Belüftungsklappe 5 ebenfalls schwenkbar beweglich angeordnet.

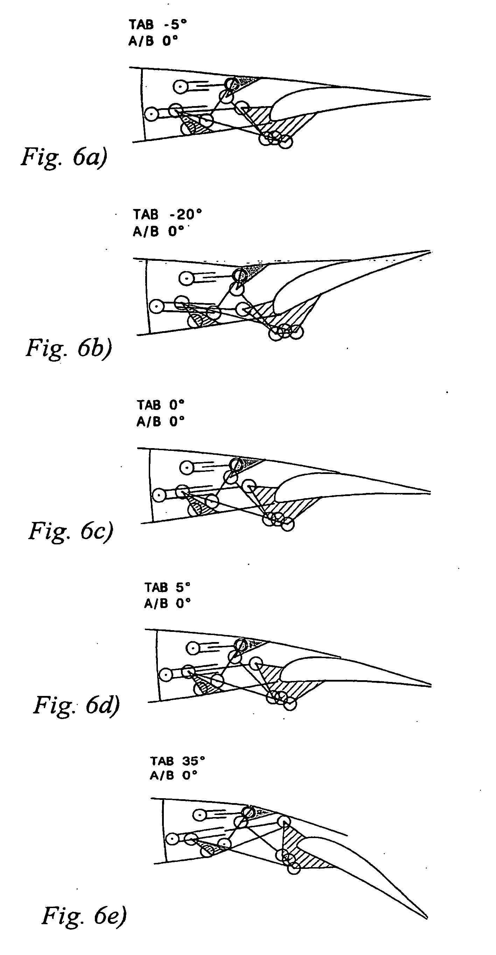

Wie die Figuren 6a) bis e) zeigen, auf die später noch näher eingegangen wird, ist die Klappe 4 (die Bezugszeichen sind in den Figuren 6a) bis e) zum Zwecke der besseren Übersicht weggelassen, vergl. Die Bezugszeichen in Figuren 1 bis 5) sowohl über positive Klappenausschläge nach unten als auch negative Klappenausschläge nach oben einstellbar. Für eine Nutzung der Klappe 4 als Steuerklappe mit Einstellungen der Klappe zwischen negativen (Figur 6b)) und kleinen positiven Klappenausschlägen (Figur 6d)) ist das Flügelprofil an der Oberseite durch eine Abdichtklappe 7 und an der Unterseite durch eine Belüftungsklappe 5 geschlossen. Für eine Nutzung der Klappe 4 als auftriebserhöhende Klappe mit Einstellungen der Klappe 4 zwischen kleinen positiven Klappenausschlägen (Figur 6d)) und großen positiven Klappenausschlägen (Figur 6e)) ist es vorgesehen, dass die Belüftungsklappe 5 eine Strömung von der Unterseite des Flügels 1 zur Oberseite der Klappe 4 freigibt und die Abdichtklappe 7 zur Freigabe eines Abstroms von der Oberseite der Klappe 4 um einen vorgegebenen Spalt entfernt wird.

Da der Mechanismus der fortschrittlichen Flügelhinterkante in der gesamten Darstellung etwas unübersichtlich ist, wird in den Figuren 2 bis 5 eine Zerlegung des gesamten Mechanismus in seine vier Untermechanismen durchgeführt. Die vier Untermechanismen sind ein Klappenführungsmechanismus, ein unterer Belüftungsklappenmechanismus, ein oberer Abdichtklappenmechanismus und ein Bremsklappenmechanismus. Diese einzelnen Mechanismen finden sich in ihrer Gesamtheit in Figur 1 wieder.

Beim Klappenführungsmechanismus, der für sich in Figur 2 dargestellt ist, handelt es sich primär im wesentlichen um ein einfaches Scharniergelenk, d. h. es wird nur ein Drehgelenk 14 benötigt, welches die Verbindung zwischen dem Flügel 1 und der Klappe 4 darstellt. Der Flügel 1 ist aus kinematischer Sicht das ortsfeste Gestell. Der Drehpunkt 14 ist so positioniert, dass für negative Klappenausschläge der Klappe 4 die Flügelprofilkontur nicht verlassen wird und dennoch möglichst viel Flächen- und Wölbungsvergrößerung für positive Klappenausschläge der Klappe 4 erzielt wird.

Der Antrieb wird durch ein lineares Schubgelenk 23, das mit dem Flügel 1 und der Klappe 4 drehbar an den Enden des jeweiligen Aktuatorelements gelagert ist, realisiert. Der Aktuator besteht aus den Teilen 2 und 3 und kann einerseits hydraulisch (Hydraulikaktuator) oder mechanisch (Spindelantrieb) betrieben werden.

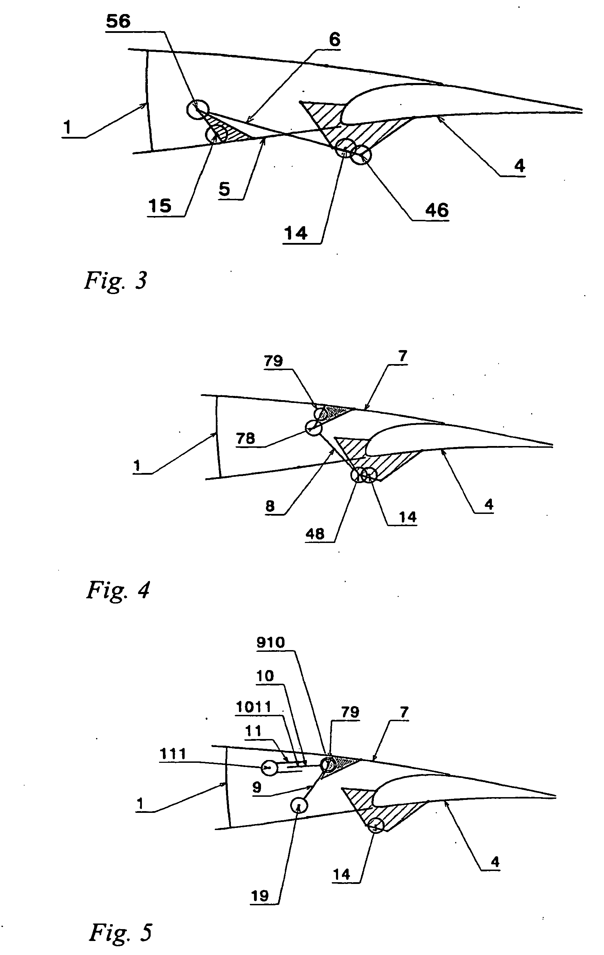

Der Belüftungsklappenmechanismus ist prinzipiell in Figur 3 schematisiert. Der ortsfeste Flügel 1 ist mit den ortsfesten Lagern 15 und 14 sichtbar. An den Flügel 1 ist die Klappe 4 und die Belüftungsklappe 5 angebunden. Die Funktion der Belüftungsklappe 5 wurde schon zuvor erwähnt, soll aber zur Verdeutlichung nochmals kurz erläutert werden. Die Funktion der Belüftungsklappe ermöglicht für größere Klappenwinkel der Klappe 4, vergleiche Figur 6e), eine ausreichende Umströmung der Klappe 4 mit energiereicher Luft, damit mehr Auftrieb entsteht und das Ablöseverhalten der Strömung verzögert wird.

Die Klappe 4 ist mit der Belüftungsklappe 5 mechanisch zwangsgeführt bzw. zwangsgekoppelt, d.h. es gibt eine eindeutige funktionelle Abhängigkeit zwischen diesen beiden Elementen. Die mechanische Kopplung wird durch einen einfachen Stab 6 realisiert. Alle Lager sind einfache Drehgelenke in der zwei dimensionalen Skizze, in einer dreidimensionalen Ausführung kann es sich hierbei sinngemäß um andere Gelenke handeln z.B. Kugelgelenke mit drei Rotationsfreiheitsgraden. Das mechanische Prinzip bleibt im dreidimensionalen Raum unverändert erhalten, daher reicht eine zweidimensionale Darstellung. Die Drehgelenke 15, 14, 56 und 46 sind also einfache Drehgelenke in der zweidimensionalen Zeichnung. Insgesamt wird also die Zwangskopplung durch den einfachst denkbaren Mechanismus (Gelenkviereck) realisiert.

Für größere positive Klappenwinkel der Klappe 4, vergleiche Figur 6e), öffnet sich die untere Belüftungsklappe 5 in Richtung der Flügelkontur auf den vorgesehenen Öffnungswinkel. Die Dimensionen der Belüftungsklappe 5 und der Öffnungswinkel werden durch die aerodynamische Randbedingungen festgelegt (maximaler Auftrieb, geringster Luftwiderstand, geringe Lärmemissionen, usw....).

Für kleinere positive und alle negativen Klappenwinkel der Klappe 4 bleibt die Belüftungsklappe 5 nahezu in ihrer nominalen Lage. Die nominale Lage ist in diesem Fall durch die Profilkontur im Reiseflug charakterisiert. Es wird also eine "quasi" Rast im Bereich von kleinen positiven bis in großen negativen Klappenausschlägen der Klappe 4 durch eine vorteilhafte technische Auslegung des Übertragungsgetriebes (das erwähnte Gelenkviereck) erzielt. Weiterhin ist im Bereich von kleinen positiven bis in großen negativen Klappenausschlägen der Klappe 4 eine komplette Dichtung der Belüftungsklappe zur Klappe 4, gewährleistet, dadurch bleibt die Profilkontur immer strömungsgünstig (geringer Luftwiderstand) und schädliche Lärmquellen in Form von Kanten, Profilkontursprüngen, Leewirbelgebieten werden vermieden.

Der Abdichtungsklappenmechanismus ist prinzipiell in Figur 4 schematisiert. Der ortsfeste Flügel 1 ist mit dem ortsfesten Lager 14 zu erkennen. Am Flügel 1 ist die Klappe 4 angebunden. Ein Lager 79 ist nur dann ortsfest zum Flügel 1, wenn die Bremsklappenfunktion der oberen Abdichtklappe 7 nicht gefahren wird. Das Lager 79 und ein weiteres Lager 910 (siehe Figur 5) befinden sich auf einer gemeinsamen Drehachse, es handelt sich hierbei also um eine Art Doppelgelenk. Zum besseren Verständnis soll zunächst vorausgesetzt werden, das sich das Lager 79 ortsfest zum Flügel 1 befindet.

Die Funktionen der oberen Abdichtungsklappe 7 sollen nachfolgend im Einzelnen dargestellt werden. Durch die Forderung negative Klappenausschläge der Klappe 4 zu ermöglichen, wird es notwendig die obere Flügelkontur bzw. die normalerweise an dieser Stelle befindlichen Bremsklappen an Verkehrsflugzeugen anzuheben, um eine Kollision der Abdichtklappe 7 (die Abdichtklappe 7 ist auch gleichzeitig die Bremsklappe, siehe nachfolgende Ausführungen) mit der Klappe 4 zu vermeiden.

Für kleine positive Klappenwinkel, vergleiche Figur 6d), bis hin zu allen negativen Klappenwinkeln der Klappe 4, vergleiche Figur 6b), darf keine Kollision zwischen der Klappe 4 und der Abdichtklappe 7 erfolgen, weiterhin muss die Klappe 4 und die Abdichtklappe 7 im gesamten gerade erwähnten Bereich gedichtet bleiben, um den Strömungswiderstand möglichst gering zu halten.

Für größere positive Klappenausschläge der Klappe 4, vergleiche Figur 6e), wo die Klappe 4 als auftriebserhöhende Komponente wirksam sein soll, wird immer ein konvergenter aerodynamischer Spalt gefordert. Daher wird für größere positive Klappenausschläge der Klappe 4, vergleiche Figur 6e), die obere Abdichtklappe 7 nach unten abgesenkt (Drehung um das Lager 79), damit der Strömungsquerschnitt konvergent bleibt. Des Weiteren ist in diesem Klappenwinkelbereich das aerodynamische Spaltmaß zwischen dem hinteren Ende der Abdichtklappe 7 und der Profilkontur der Klappe 4 immer exakt einzuhalten. Dies lässt sich derzeit bei den geforderten aerodynamischen Toleranzen mit keiner bekannten Regelung realisieren, daher ist hier eine mechanische Zwangsführung zwischen der Klappe 4 und der Abdichtklappe 7 notwendig, dies gilt insbesondere für die Landeposition der Klappe 4.

Für eine solche Zwangsführung wird wieder die einfachste mechanische Lösung favorisiert, daher werden alle genannten Forderungen durch eine vorteilhafte Auslegung des oben genannten Gelenkvierecks (Lager: 79, 78, 48, 14) umgesetzt. Ein mechanischer Kopplungsstab 8 verbindet die Abdichtklappe 7 und die Klappe 4.

Der Bremsklappenmechanismus arbeitet nahezu komplett mechanisch entkoppelt vom Klappenmechanismus, es besteht lediglich eine funktionale Abhängigkeit zwischen dem absoluten Bremsklappenausschlag der oberen Abdichtklappe 7 (bezogen auf den ortsfesten Flügel 1) und dem Klappenausschlagwinkel der Klappe 4, dies wird durch eine entsprechende Regelung im Flugsteuerungscomputer berücksichtigt. Diese Regelung tangiert nicht den Abdichtklappenmechanismus (außer im Fehlerfall), weil im Bremsklappenmodus das aerodynamische Spaltmaß aufgegeben wird mit entsprechendem Auftriebsverlust und Erhöhung des Luftwiderstandes.

Die normalen Bremsklappenfunktionen können somit unverändert durch einen weiteren Antrieb (Element 10 und Element 11) generiert werden, ohne das der zuvor erwähnte Mechanismus des unteren Paneels (Belüftungsklappe) 5 und des oberen Paneels (Abdichtklappe) 7 in seiner Funktionsweise beeinträchtigt wäre. Die typische Bremsklappe wirkt unter anderem als Luftbremse, als Auftriebsvemichter, als Rollsteuerung und als Flügelentlastung.

In Figur 5 sind die zusätzlichen kinematischen Elemente dargestellt, die für der obere Abdichtklappe 7 auch die Bremsklappenfunktion ermöglichen. Folglich wirkt die obere Abdichtklappe auch als Bremsklappe. Weiterhin wird die Bremsklappenfunktion durch einen eigenen Antrieb aktuiert. Die Aktuatoreinrichtung besteht aus den Teilen 10 (Aktuator) und 11 (Aktuatorstange) und kann hydraulisch (Hydraulikaktuator) oder mechanisch (Spindelantrieb) betrieben werden. Die Aktuatoreinrichtung der Bremsklappenfunktion bewegt das Element 9 über das Lager 910, um ein Lager 19 auf einer Kreisbahn. Die Bewegung des Elements 9 auf der Kreisbahn hat zur Folge, dass das Doppelgelenk 79 ebenfalls sich auf dieser Kreisbahn bewegt. Die Abdichtklappe 7 (wenn sie als Bremsklappe aktiv ist) bewegt sich somit auf der Koppel des Gelenkvierecks 48, 78, 79 und 19. Das Lager 19 ist in einer vorteilhaften Weise platziert, damit es zu keiner Kollision mit dem Flügel 1 kommt.

Bei Bedarf kann der Bremsklappenmechanismus auch nicht in das kinematische System integriert sondern separat vorgesehen werden, dies wäre im äußeren Flügelbereich als Querruder denkbar.

Für negative Klappenausschläge und kleine positive Klappenausschläge der Klappe 4 ist die Flügelprofilform komplett abgedichtet (durch die untere Belüftungsklappe 5 und die obere Abdichtungsklappe 7 und strömungsgünstig, dadurch ergibt sich ein günstiger Widerstandsbeiwert und es werden keine Wirbel generiert, die auch zur Lärmemission beitragen (siehe Figur 6a) bis e): TAB -20°, A/B 0°; TAB -5°, A/B 0°; TAB 0°, A/B 0; TAB 5°, A/B 0°).

Der aerodynamischer Klappenspalt wird durch eine mechanische Zwangsführung zur Klappe 4 exakt gehalten, es wird kein komplexer Regelkreis zum Einhalten des Klappenspalts (aerodynamischen Luftspalttoleranzen) notwendig. Allein der Aktuator für die Klappe 4 ( Aktuatorkörper 2 und Aktuatorstange 3) bewerkstelligt diese Funktionen. Für größere positive Klappenwinkel der Klappe 4 schwenkt die untere Belüftungsklappe 5 in die Flügelprofilkontur und die vorteilhafte Umströmung der Klappe 4 wird erzielt. Die obere Abdichtungsklappe 7 agiert ab größeren Klappenwinkeln der Klappe 4 nicht mehr als Dichtung, sondern muss die aerodynamische Strömungskonvergenz und das aerodynamische Spaltmaß exakt halten, siehe Figur 6e): TAB 35°, A/B 0°).

Die Bereiche, wo die untere Belüftungsklappe 5 von den Kopplungsstäben 6 und 8 durchdrungen wird, bzw. wo Tragstrukturen zum Flügel 1 verlaufen, werden aerodynamische Verkleidungen (Fairings) angebracht.

Mit der erfindungsgemäßen Flügelhinterkante lassen sich sowohl eine primäre als auch eine sekundäre Flugsteuerung bewirken. D. h. hohe Stellgeschwindigkeiten für primäre Steuerflächen lassen sich verwirklichen.

Die erfindungsgemäße Flügelhinterkante kann als adaptiver Flügel fungieren, durch kleine positive bzw. negative stationäre Klappenausschläge kann immer der wirtschaftlich günstigste Betriebspunkt für die jeweilige Flughöhe (Dichte, Temperatur, usw....), den Beladungszustand und der Fluggeschwindigkeit eingestellt werden. Für kleine positive Klappenausschläge und für alle negativen Klappenausschläge bleibt die Flügelprofilkontur geschlossen (außer im Bremsklappenmodus) und die Protilform bleibt aerodynamisch strömungsgünstig. Bei herkömmlich sekundären Hochauftriebssystemen war dies i. d. R. nicht möglich, weil sich negative Klappenausschläge nicht realisieren ließen.

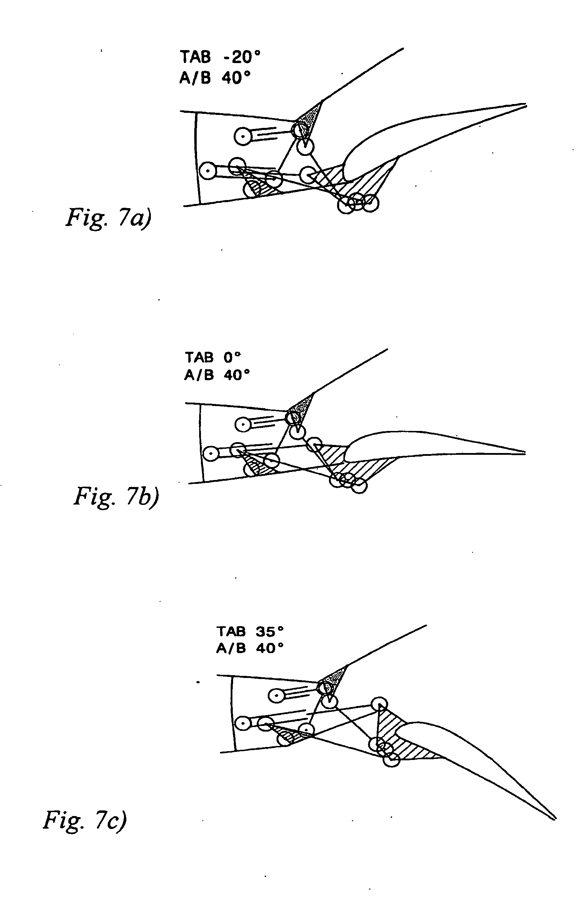

Der Bremsklappenmodus der oberen Abdichtklappe 7, die hier als Bremsklappe wirkt, ist zum besseren Verständnis in den Figuren 7a) bis c) in verschiedenen Konfigurationen dargestellt (TAB -20°, A/B 40°; TAB 0°, A/B 40; TAB 35°, A/B 40°).

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Flügel
- 2: Aktuatorkörper
- 3: Aktuatorstange
- 4: Klappe
- 5: Belüftungsklappe
- 6: Stab
- 7: Abdichtklappe
- 8: Verbindungsstange
- 9: Verbindungsstange
- 10: Aktuatorstange
- 11: Aktuatorkörper
- 12: ortsfestes Lager
- 14: ortsfestes Lager
- 15: ortsfestes Lager
- 19: Lager
- 23: Verbindungsstange
- 34: Lager
- 46: Drehgelenk
- 48: zweites Lager
- 56: Drehgelenk
- 78: drittes Lager
- 79: viertes Lager
- 111: ortsfestes Lager, Drehgelenk
- 910: Lager
- 1011: Verbindungsstange

## Patentansprüche

1. Fortschrittliche Flügelhinterkante am Flügel eines Flugzeugs, mit einem Flügel (1), einer an der Hinterkante des Flügels (1) angeordneten, in Spannweitenrichtung verlaufenden, auf unterschiedliche Ausschläge einstellbaren Klappe (4), einer an der Oberseite zwischen dem Flügel (1) und der Klappe (4) angeordneten schwenkbar beweglichen Abdichtklappe (7) und einer an der Unterseite zwischen dem Flügel (1) und der Klappe (4) angeordneten schwenkbar beweglichen Belüftungsklappe (5), wobei die Klappe (4) sowohl über positive Klappenausschläge nach unten als auch negative Klappenausschläge nach oben einstellbar ist, **dadurch gekennzeichnet, dass** für eine Nutzung der Klappe (4) als Steuerklappe mit Einstellungen der Klappe zwischen negativen und kleinen positiven Klappenausschlägen das Flügelprofil an der Oberseite durch die Abdichtklappe (7) und an der Unterseite durch die Belüftungsklappe (5) geschlossen ist und für eine Nutzung der Klappe (4) als auftriebserhöhende Klappe mit Einstellungen der Klappe (4) zwischen kleinen positiven und großen positiven Klappenausschlägen die Belüftungsklappe (5) eine Strömung von der Unterseite des Flügels (1) zur Oberseite der Klappe (4) freigibt und die Abdichtklappe (7) zur Freigabe eines Abstroms von der Oberseite der Klappe (4) um einen vorgegebenen Spalt entfernt wird.

2. Fortschrittliche Flügelhinterkante nach Anspruch 1, **dadurch gekennzeichnet, dass** die Abdichtklappe (7) zur Nutzung als Bremsklappe mit ihrem hinteren Ende nach oben schwenkbar ist.

3. Fortschrittliche Flügelhinterkante nach Anspruch 1 oder 2, **dadurch gekennzeichnet, dass** die Abdichtklappe (7) mit der Klappe (4) zwangsgeführt ist.

4. Fortschrittliche Flügelhinterkante nach Anspruch 1, 2 oder 3, **dadurch gekennzeichnet, dass** ein Klappenführungsmechanismus vorgesehen ist, der ein zwischen dem Flügel (1) und der Klappe (4) angeordnetes Drehgelenk (14) enthält.

5. Fortschrittliche Flügelhinterkante nach Anspruch 1, 2, 3 oder 4, **dadurch gekennzeichnet, dass** der Drehpunkt des Drehgelenks (14) ist so positioniert, dass für negative Klappenausschläge der Klappe (4) die Flügelprofilkontur nicht verlassen wird und für positive Klappenausschläge der Klappe (4) eine wesentliche Flächen- und Wölbungsvergrößerung erzielt wird.

6. Fortschrittliche Flügelhinterkante nach einem der Ansprüche 1 bis 5, **dadurch gekennzeichnet, dass** der Antrieb für den Ktappenführungsmechanismus durch ein lineares Schubelement (23) gebildet ist, das mit dem Flügel (1) und der Klappe (4) gekoppelt ist.

7. Fortschrittliche Flügelhinterkante nach Anspruch 6, **dadurch gekennzeichnet, dass** das Schubelement (23) einen Aktuator (2, 3) enthält.

8. Fortschrittliche Flügelhinterkante nach Anspruch 7, **dadurch gekennzeichnet, dass** der Aktuator (2, 3) hydraulisch (Hydraulikaktuator) oder mechanisch (Spindelantrieb) betrieben ist.

9. Fortschrittliche Flügelhinterkante nach einem der Ansprüche 1 bis 8 **dadurch gekennzeichnet, dass** die Klappe (4) ist mit der Belüftungsklappe (5) mechanisch zwangsgeführt bzw. zwangsgekoppelt ist.

10. Fortschrittliche Flügelhinterkante nach Anspruch 9, **dadurch gekennzeichnet, dass** ein Belüftungsklappenmechanismus vorgesehen ist, bei dem die Belüftungsklappe (5) über ein an ortsfesten Lagern (15) und (14) gelagertes, zwei Hebel (Stäbe 5, 6) enthaltendes Hebelwerk an den Flügel (1) angebunden ist.

11. Fortschrittliche Flügelhinterkante nach einem der Ansprüche 1 bis 10, **dadurch gekennzeichnet, dass** ein Abdichtklappenmechanismus vorgesehen ist, bei dem die Abdichtklappe (7) mit der Klappe (4) zwangsgeführt ist.

12. Fortschrittliche Flügelhinterkante nach Anspruch 11, **dadurch gekennzeichnet, dass** bei dem Abdichtklappenmechanismus die Abdichtklappe (7) durch ein über ein nahe dem ortsfesten Lager (14) an einem zweiten Lager (48) mit der Klappe (4) und nahe einem vierten Lager (79) über ein drittes Lager (78) mit der Abdichtklappe (7) gekoppeltes Hebelwerk durch die Klappe (4) zwangsgeführt ist.

13. Fortschrittliche Flügelhinterkante nach Anspruch 12, **dadurch gekennzeichnet, dass** das den Kopplungsstab (8) enthaltende, die Abdichtklappe (7) mit der Klappe (4) verbindende Hebelwerk ein Gelenkviereck (Lager: 79, 78, 48, 14) bildet.

14. Fortschrittliche Flügelhinterkante nach Anspruch 12 oder 13, **dadurch gekennzeichnet, dass** das vierte Lager (79) bei Bewegung der Abdichtklappe (7) im Sinne einer Bremsklappenfunktion mitgenommen wird.

15. Fortschrittliche Flügelhinterkante nach Anspruch 13 oder 14, **dadurch gekennzeichnet, dass** ein weiteres Lager (910) an der oberen Abdichtungsklappe (7) vorgesehen ist, mit welchem ein Aktuator (10, 11) zur Betätigung der Abdichtklappe (7) im Sinne einer Bremsklappenfunktion gekoppelt ist.

16. Fortschrittliche Flügelhinterkante nach Anspruch 15, **dadurch gekennzeichnet, dass** das weitere Lager (910) auf einer gemeinsamen Drehachse mit dem vierten Lager (79) angeordnet ist.

17. Fortschrittliche Flügelhinterkante nach einem der Ansprüche 11 bis 16, **dadurch gekennzeichnet, dass** der Abdichtklappenmechanismus so ausgebildet ist, dass für kleine positive Klappenwinkel bis hin zu allen negativen Klappenwinkeln der Klappe (4) eine Kollision zwischen der Klappe (4) und der Abdichtklappe (7) vermieden und die Abdichtklappe (7) im gesamten gerade erwähnten Bereich gegen die Klappe (4) abgedichtet ist.

18. Fortschrittliche Flügelhinterkante nach Anspruch 17, **dadurch gekennzeichnet, dass** für größere positive Klappenausschläge der Klappe (4), wo die Klappe (4) als auftriebserhöhende Komponente wirksam ist, die obere Abdichtklappe (7) im Sinne einer Erzeugung eines konvergenten aerodynamischen Spalts durch Drehung um das vierte Lager (79) nach unten abgesenkt wird.

19. Fortschrittliche Flügelhinterkante nach einem der Ansprüche 11 bis 18, **dadurch gekennzeichnet, dass** eine funktionale Abhängigkeit zwischen dem absoluten Bremsklappenausschlag der oberen Abdichtklappe (7) (bezogen auf den ortsfesten Flügel 1) und dem Klappenausschlagwinkel der Klappe (4) durch eine entsprechende Regelung im Flugsteuerungscomputer vorgenommen wird.

20. Fortschrittliche Flügelhinterkante nach einem der Ansprüche 11 bis 19, **dadurch gekennzeichnet, dass** die für die Bremsklappenfunktion vorgesehene Aktuatoreinrichtung (10, 11) das Element (9) über das weitere Lager (910) um ein Lager (19) auf einer Kreisbahn bewegt, wodurch das durch das vierte Gelenk (79) und das weitere Gelenk (910) gebildete Doppelgelenk ebenfalls sich auf dieser Kreisbahn bewegt.

21. Fortschrittliche Flügelhinterkante nach einem der Ansprüche 11 bis 20, **dadurch gekennzeichnet, dass** der Bremsklappenmechanismus weitgehend vom oberen Abdichtungsmechanismus entkoppelt ist.

22. Fortschrittliche Flügelhinterkante nach einem der Ansprüche 1 bis 14, **dadurch gekennzeichnet, dass** der Bremsklappenmechanismus nicht in das kinematische System integriert sondern separat vorgesehen ist.

23. Fortschrittliche Flügelhinterkante nach einem der Ansprüche 1 bis 22, **dadurch gekennzeichnet, dass** alle Lager einfache Drehgelenke sind.

24. Fortschrittliche Flügelhinterkante nach einem der vorhergehenden Ansprüche, **dadurch gekennzeichnet, dass** die Konstruktion im wesentlichen nur aus Stäben und Fachwerken besteht.

25. Fortschrittliche Flügelhinterkante nach einem der Ansprüche 1 bis 24, **dadurch gekennzeichnet, dass** die Kinematik in einer dreidimensionalen Ausführung für eine zylindrische Bewegung der Klappe (4) vorgesehen ist.

26. Fortschrittliche Flügelhinterkante nach einem der Ansprüche 1 bis 24, **dadurch gekennzeichnet, dass** die Kinematik in einer dreidimensionalen Ausführung für eine konische Bewegung der Klappe (4) vorgesehen ist.

27. Fortschrittliche Flügelhinterkante nach einem der Ansprüche 1 bis 26, **dadurch gekennzeichnet, dass** die fortschrittliche Flügelhinterkante als primäre Steuerfläche dient.

28. Fortschrittliche Flügelhinterkante nach einem der Ansprüche 1 bis 26, **dadurch gekennzeichnet, dass**, die fortschrittliche Flügelhinterkante als sekundäre Steuerfläche dient.

29. Fortschrittliche Flügelhinterkante nach einem der vorhergehenden Ansprüche, **dadurch gekennzeichnet, dass** die fortschrittliche Flügelhinterkante als adaptive Flügelkomponente dient.

30. Fortschrittliche Flügelhinterkante nach einem der vorhergehenden Ansprüche, **gekennzeichnet durch** die Verwendung an der Flügelhinterkante in Verkehrsflugzeugen und Transportflugzeugen mit einem hohem Abfluggewicht.

## Claims

1. An advanced trailing edge on the wing of an aircraft, with a wing (1), a flap (4) arranged on the trailing edge of the wing, extending in the wingspan direction and being adjustable to different deflections, a pivoted movable sealing flap (7) that is arranged on the upper side between the wing (1) and the flap (4), and a pivoted movable ventilation flap (5) that is arranged on the underside between the wing (1) and the flap (4), wherein the flap (4) can be adjusted downward through positive flap deflections as well as upward through negative flap deflections, **characterized in that** the wing profile is closed on the upper side by the sealing flap (7) and on the underside by the ventilation flap (5) for use of the flap (4) as a control flap with adjustments of the flap between negative and low positive flap deflections, and the ventilation flap (5) releases an air flow from the underside of the wing (1) to the upper side of the flap (4) for use of the flap (4) for increasing the lift with adjustments of the flap (4) between low positive and high positive flap deflections and the sealing flap (7) is removed to form a predetermined gap in order to release an outflow of air from the upper side of the flap (4).

2. The advanced trailing edge of claim 1, **characterized in that** the rear end of the sealing flap (7) can be pivoted upward for use as a brake flap.

3. The advanced trailing edge of claim 1 or 2, **characterized in that** the sealing flap (7) is forced driven by the flap (4).

4. The advanced trailing edge of claim 1, 2 or 3 **characterized, in that** a flap guide mechanism is provided, that contains a hinge (14) arranged between the wing (1) and the flap (4).

5. The advanced trailing edge of claim 1, 2, 3 or 4, **characterized in that** the pivotal point of the hinge (14) is positioned such that the flap does not diverge from the wing profile contour for negative flap deflections of the flap (4) and a significant surface increase and curvature increase is achieved in positive flap deflections of the flap (4).

6. The advanced trailing edge of claim 1 to 5, **characterized in that** the drive for the flap guide mechanism consists of a linear feed element (23) that is coupled to the wing (1) and to the flap (4).

7. The advanced trailing edge of claim 6, wherein the feed element (23) comprises an actuator (2, 3).

8. The advanced trailing edge of claim 7, **characterized in that** in the actuator (2, 3) is operated hydraulically (hydraulic actuator) or mechanically (spindle drive).

9. The advanced trailing edge of claim 1 to 8, **characterized in that** the flap (4) is mechanically forced-driven, or forced-coupled with the ventilation flap (5).

10. The advanced trailing edge of claim 9, **characterized in that** a ventilation flap mechanism is provided, in which the ventilation flap (5) is connected to the wing (1) by a lever mechanism that is supported on stationary bearings (15) and (14) and contains two levers (rods 5, 6).

11. The advanced trailing edge of claim 1 to 10, **characterized in that** a sealing flap mechanism is provided, in which the sealing flap (7) is forced driven by the flap.

12. The advanced trailing edge of claim 11, **characterized in that** the sealing flap (7) of the sealing flap mechanism is forced driven by the flap (4) by a lever mechanism that is coupled to the flap (4) at a second bearing (48) near the stationary bearing (14) and to the sealing flap (7) by a third bearing (78) near a fourth bearing (79).

13. The advanced trailing edge of claim 12, **characterized in that** the lever mechanism that connects the sealing flap (7) to the flap (4) and contains the coupling rod (8) forms a four-bar mechanism (bearings 79, 78, 48, 14).

14. The advanced trailing edge of claim 12 and 13, **characterized in that** the fourth bearing (79) participates in a movement of the sealing flap (7) in the sense of a brake flap function.

15. The advanced trailing edge of claim 13 or 14, **characterized in that** another bearing (910) is provided on the upper sealing flap (7), to which an actuator (10, 11) is coupled in order to actuate the sealing flap (7) in the sense of a brake flap function.

16. The advanced trailing edge of claim 15, **characterized in that** the additional bearing (910) is arranged on a common pivoting axis with the fourth bearing (79).

17. The advanced trailing edge of claim 11 to 16, **characterized in that** the sealing flap mechanism is formed such that a collision between the flap (4) and the sealing flap (7) is prevented between low positive flap angles and all negative flap angles of the flap (4) and the sealing flap (7) is sealed relative to the flap (4) in the entire aforementioned range.

18. The advanced trailing edge of claim 17, **characterized in that** the upper sealing flap (7) is lowered downward in order to produce a convergent aerodynamic gap by rotation about the fourth bearing (79) at major positive flap deflections of the flap (4), in which the flap (4) acts as a lift-increasing component.

19. The advanced trailing edge of one of the claims 11 to 18, **characterized in that** a functional dependence between the absolute brake flap deflection of the upper sealing flap (7) (referred to the stationary wing (1)) and the flap deflection angle of the flap (4) is realized by a corresponding control in the flight control computer.

20. The advanced trailing edge of one of the claims 11 to 19, **characterized in that** the actuator device (10, 11) provided for the brake flap function moves the element (9) along a circular path about a bearing (19) by the additional bearing (910) such that the double hinge formed by the fourth hinge (79) and the additional hinge (910) also moves along this circular path.

21. The advanced trailing edge of one of the claims 11 to 20, **characterized in that** the brake flap mechanism preferably is largely decoupled from the upper sealing mechanism.

22. The advanced trailing edge of one of the claims 11 to 14, **characterized in that** the brake flap mechanism is not integrated into the kinematic system but provided separately.

23. The advanced trailing edge of one of the claims 1 to claim 22, **characterized in that** all bearings are simple hinges.

24. The advanced trailing edge of one of the precedent claims, **characterized in that** the construction essentially consists of rods and frameworks only.

25. The advanced trailing edge of one of claims 1 to 24, **characterized in that** the kinematics designed three-dimensionally are provided for a cylindrical movement of the flap (4).

26. The advanced trailing edge of one of the claim 1 to 24, **characterized in that** the kinematics designed three-dimensionally are provided for a conical movement of the flap (4).

27. The advanced trailing edge of one of the claims 1 to 26, **characterized in that** the advanced trailing edge serves as primary control surface.

28. The advanced trailing edge of one of the claims 1 to 26, **characterized in that** the advanced trailing edge serves as secondary control surface.

29. The advanced trailing edge of one of the precedent claims, **characterized in that** the advanced trailing edge serves as adaptive wing component.

30. The advanced trailing edge of one of the precedent claims, **characterized in that** the advanced trailing edge is used on the trailing wing edge of commercial aircraft and transport aircraft with a high take-off weight.

## Revendications

1. Bord de fuite évolué sur l'aile d'un avion, comprenant une aile (1), un volet (4) disposé sur le bord de fuite de l'aile (1), s'étendant dans la direction de l'envergure et réglable sur des débattements différents, un volet d'étanchéité (7) mobile pivotant, disposé sur le côté supérieur entre l'aile (1) et le volet (4), et un volet d'aération (5) mobile pivotant, disposé sur le côté inférieur entre l'aile (1) et le volet (4), le volet (4) étant réglable aussi bien vers le bas par l'intermédiaire de débattements positifs que vers le haut par l'intermédiaire de débattements négatifs, **caractérisé en ce que**, pour une utilisation du volet (4) en tant que volet de commande avec des réglages du volet entre des débattements négatifs et de faibles débattements positifs, le profil d'aile est fermé sur le côté supérieur par le volet d'étanchéité (7) et sur le côté inférieur par le volet d'aération (5) et, pour une utilisation du volet (4) en tant que volet hypersustentateur avec des réglages du volet (4) entre de faibles débattements positifs et des débattements positifs élevés, le volet d'aération (5) libère un écoulement du côté inférieur de l'aile (1) en direction du côté supérieur du volet (4) et le volet d'étanchéité (7) est écarté pour produire une déflexion du côté supérieur du volet (4) autour d'une fente prédéfinie.

2. Bord de fuite évolué suivant la revendication 1, **caractérisé en ce que** le volet d'étanchéité (7) peut pivoter vers le haut par son extrémité arrière pour l'utilisation en tant que frein aérodynamique.

3. Bord de fuite évolué suivant l'une des revendications 1 ou 2, **caractérisé en ce que** le volet d'étanchéité (7) est à guidage forcé avec le volet (4).

4. Bord de fuite évolué suivant l'une des revendications 1, 2 ou 3, **caractérisé en ce qu'**il est prévu un mécanisme de guidage de volet, qui comporte une articulation à charnière (14) disposée entre l'aile (1) et le volet (4).

5. Bord de fuite évolué suivant l'une des revendications 1, 2, 3 ou 4, **caractérisé en ce que** le centre de rotation de l'articulation à charnière (14) est positionné de sorte que, pour des débattements négatifs du volet (4), le contour du profil d'aile n'est pas quitté et, pour des débattements positifs du volet (4), une augmentation significative de surface et de courbure est obtenue.

6. Bord de fuite évolué suivant l'une des revendications 1 à 5, **caractérisé en ce que** l'entraînement pour le mécanisme de guidage du volet est formé par un élément de poussée linéaire (23), qui est couplé à l'aile (1) et au volet (4).

7. Bord de fuite évolué suivant la revendication 6, **caractérisé en ce que** l'élément de poussée (23) comporte un vérin (2, 3).

8. Bord de fuite évolué suivant la revendication 7, **caractérisé en ce que** le vérin (2, 3) fonctionne par voie hydraulique (vérin hydraulique) ou par voie mécanique (actionneur à vérin à vis).

9. Bord de fuite évolué suivant l'une des revendications 1 à 8, **caractérisé en ce que** le volet (4) est à guidage et/ou à couplage forcé mécanique avec le volet d'aération (5).

10. Bord de fuite évolué suivant la revendication 9, **caractérisé en ce qu'** il est prévu un mécanisme de volet d'aération, dans lequel le volet d'aération (5) est rattaché à l'aile (1) par l'intermédiaire d'un mécanisme à levier monté sur des paliers fixes (15) et (14) et comportant deux leviers (barres 5, 6).

11. Bord de fuite évolué suivant l'une des revendications 1 à 10, **caractérisé en ce qu'**il est prévu un mécanisme de volet d'étanchéité, dans lequel le volet d'étanchéité (7) est à guidage forcé avec le volet (4).

12. Bord de fuite évolué suivant la revendication 11, **caractérisé en ce que**, dans le mécanisme de volet d'étanchéité, le volet d'étanchéité (7) est à guidage forcé par le volet (4) par un mécanisme à levier, couplé au volet (4) par l'intermédiaire d'un deuxième palier (48) au voisinage du palier fixe (14), et au volet d'étanchéité (7), au voisinage d'un quatrième palier (79), par l'intermédiaire d'un troisième palier (78).

13. Bord de fuite évolué suivant la revendication 12, **caractérisé en ce que** le mécanisme à levier, qui comporte la barre d'accouplement (8) et relie le volet d'étanchéité (7) avec le volet (4), forme un quadrilatère articulé (paliers 79, 78, 48, 14)

14. Bord de fuite évolué suivant l'une des revendications 12 ou 13, **caractérisé en ce que** le quatrième palier (79) est entraîné lors du déplacement du volet d'étanchéité (7) dans le sens d'une fonction de frein aérodynamique.

15. Bord de fuite évolué suivant l'une des revendications 13 ou 14, **caractérisé en ce qu'**il est prévu un palier supplémentaire (910) sur le volet d'étanchéité supérieur (7), auquel est couplé un vérin (10, 11) pour l'actionnement du volet d'étanchéité (7) dans le sens d'une fonction de frein aérodynamique.

16. Bord de fuite évolué suivant la revendication 15, **caractérisé en ce que** le palier supplémentaire (910) est disposé sur un axe de rotation commun avec le quatrième palier (79)

17. Bord de fuite évolué suivant l'une des revendications 11 à 16, **caractérisé en ce que** le mécanisme de volet d'étanchéité est réalisé de sorte que, pour de petits angles de débattement positifs jusqu'à tous les angles de débattement négatifs du volet (4), une collision est évitée entre le volet (4) et le volet d'étanchéité (7) et le volet d'étanchéité (7) est étanchéifié par rapport au volet (4) dans toute la zone justement mentionnée.

18. Bord de fuite évolué suivant la revendication 17, **caractérisé en ce que**, pour des débattements positifs relativement élevés du volet (4), où le volet (4) agit en tant que composant hypersustentateur, le volet d'étanchéité (7) supérieur est abaissé vers le bas par rotation autour du quatrième palier (79) dans le sens d'une production d'une fente aérodynamique convergente.

19. Bord de fuite évolué suivant l'une des revendications 11 à 18, **caractérisé en ce qu'**une relation fonctionnelle entre le débattement absolu de frein aérodynamique du volet d'étanchéité supérieur (7) (par rapport à l'aile 1 fixe) et l'angle de débattement du volet (4) est assurée par un réglage approprié dans l'ordinateur de commande de vol.

20. Bord de fuite évolué suivant l'une des revendications 11 à 19, **caractérisé en ce que** le système de vérin (10, 11), prévu pour la fonction de frein aérodynamique, déplace sur une orbite l'élément (9) par l'intermédiaire du palier supplémentaire (910) autour d'un palier (19), la double articulation, formée par la quatrième articulation (79) et l'articulation supplémentaire (913), se déplaçant également de ce fait sur cette orbite.

21. Bord de fuite évolué suivant l'une des revendications 11 à 20, **caractérisé en ce que** le mécanisme de frein aérodynamique est sensiblement découplé du mécanisme d'étanchéité supérieur.

22. Bord de fuite évolué suivant l'une des revendications 11 à 14, **caractérisé en ce que** le mécanisme de frein aérodynamique n'est pas intégré dans le système cinématique mais est prévu séparément.

23. Bord de fuite évolué suivant l'une des revendications 1 à 22, **caractérisé en ce que** tous les paliers sont de simples articulations à charnière.

24. Bord de fuite évolué suivant l'une des revendications précédentes, **caractérisé en ce que** la construction est essentiellement constituée uniquement de barres et de treillis.

25. Bord de fuite évolué suivant l'une des revendications 1 à 24, **caractérisé en ce que** la cinématique est prévue dans une réalisation tridimensionnelle pour un déplacement cylindrique du volet (4)

26. Bord de fuite évolué suivant l'une des revendications 1 à 24, **caractérisé en ce que** la cinématique est prévue dans une réalisation tridimensionnelle pour un déplacement conique du volet (4).

27. Bord de fuite évolué suivant l'une des revendications 1 à 26, **caractérisé en ce que** le bord de fuite évolué sert de gouverne primaire.

28. Bord de fuite évolué suivant l'une des revendications 1 à 26, **caractérisé en ce que** le bord de fuite évolué sert de gouverne secondaire.

29. Bord de fuite évolué suivant l'une des revendications précédentes, **caractérisé en ce que** le bord de fuite évolué sert de composant d'aile adaptatif.

30. Bord de fuite évolué suivant l'une des revendications précédentes, **caractérisé par** l'utilisation sur le bord de fuite dans des avions commerciaux et des avions de transport d'un poids au décollage élevé.
